# EUROPEAN PATENT SPECIFICATION

(11) **EP 2 447 125 B1**
(45) Date of publication and mention of the grant of the patent: **14.05.2014**
(21) Application number: 11186838.6
(22) Date of filing: 27.10.2011
(51) Int. Cl.: B60W 30/18, B60W 10/06, B60W 10/02, B60W 10/184

(54) **Idling stop control device**
Vorrichtung zur Steuerung von Leerlaufstopp
Dispositif de contrôle de butée de ralenti

(30) Priority: 28.10.2010 JP 2010242296
(43) Date of publication of application: 02.05.2012
(73) Proprietor: Aisin Seiki Kabushiki Kaisha, Aichi 448-8650 (JP)
(72) Inventor: MASE, Atsuhiro c/o AISIN SEIKI KABUSHIKI KAISHA, Kariya-shi, Aichi 448-8650 (JP); HISAEDA, Yusuke c/o AISIN SEIKI KABUSHIKI KAISHA, Kariya-shi, Aichi 448-8650 (JP)
(74) Representative: TBK

(56) References cited:
- EP-A2- 2 223 835
- JP-A- 2000 313 253
- US-A1- 2007 054 773
- US-A1- 2007 114 841

## Description

### TECHNICAL FIELD

This disclosure generally relates to an idling stop control device according to the preamble of claim 1.

### BACKGROUND DISCUSSION

In recent years, vehicles equipped with an idling stop device are becoming common. The idling stop device automatically stops an idling of an engine when a moving vehicle comes to a temporary stop at a red signal or similar situations and automatically starts the engine when the vehicle starts moving again. The idling stop device improves fuel efficiency according to a length of time the idling is stopped. By cutting off the emission gas during an idling period, the idling stop device effectively reduces an environmental impact by reducing CO₂. The idling stop device also effectively cuts off an engine noise during the idling period for pedestrians and neighborhood consideration. For the idling stop device, detecting driver's intentions with accuracy is important for controlling the engine according to the driver's intentions. An example of a control device for such an idling stop device is disclosed in JP2002-188480A(US 2002 074 173).

The control device disclosed in JP2002-188480A for automatically stopping and starting an engine controls the engine according to a predetermined automatic engine stop condition and a predetermined automatic engine start condition. The control device automatically stops the engine when a vehicle speed is less than or equal to a set value excluding zero, and in addition, an idle switch is ON, and further, the gear position of the transmission is in neutral. The control device automatically starts the engine when an engaged clutch state is changed to a release state, or the gear position of the transmission is at a position other than neutral, or the idle switch is OFF, or a state of a booster is in a predetermined negative pressure. The control device describes that the aforementioned conditions provides controls for the automatic stop and the automatic start of the engine that comfortably match the driver's intentions.

As described above, the control device disclosed in JP2002-188480A includes the position of the transmission is in neutral as one of the conditions for the automatic stop of the engine. According to the control device, the position of the transmission is in neutral because if the transmission is in a drive position and the clutch is engaged, the engine and driving wheels and related members therebetween are interlocked and the inertia of rotating members becomes too large for a starter to start the engine automatically. Therefore, the idling stop function does not work when the driver stops the vehicle temporarily by pressing the clutch pedal and the brake pedal with the transmission in the drive position.

The control device disclosed in JP2002-188480A also includes changing an engaged clutch state to a release state and the gear position of the transmission in a position other than neutral as conditions for the automatic start of the engine. Due to these conditions, the engine automatically starts when the clutch pedal is pressed or the gear is shifted to a drive position, however, a certain time is necessary before the vehicle starts moving after the brake pedal is released. With the control device disclosed in JP2002-188480A, fuel is consumed unnecessarily during this certain time.

Meanwhile, assuring the idling stop function with higher vehicle safety is highly important for preventing risks at the time of the automatic start of the engine, for example, an unintentional sudden start (or a sudden acceleration), an unintentional engine stop (or an engine stall), or a backward vehicle motion (or a rear motion) that occurs when moving the vehicle from the temporary stop on a slope.

Furthermore, an idling stop control device according to the preamble of claim 1 is known from EP 2 223 835 A2. A further idling stop control device is disclosed in US 2007/114841 A1.

It is the object of the present invention to provide an idling stop control device that improves fuel efficiency by making the idling stop period longer and enhances safety of the vehicle at the same time when the vehicle starts moving by the automatic engine start.

### SUMMARY

According to the present invention, the above object is solved with an idling stop control device having the features of claim 1.

According to the present invention, an idling stop control device, adapted to connect a transmission to an engine mounted to a vehicle to be selectively engaged via a clutch, automatically stops an engine upon satisfaction of a predetermined stop condition during an idling of the engine and automatically starts the engine upon satisfaction of a predetermined start condition when the engine is in an automatic stop state. During the automatic stop state, a braking force sustaining means generates a predetermined braking force irrespective of an operation amount of a brake operation member and a start judgment means judges satisfaction of the predetermined start condition. When the predetermined start condition is satisfied, an automatic start means automatically starts the engine. A braking force release means releases a predetermined braking force when a predetermined hold time duration elapses from a specific point in time where the operation amount of the brake operation member starts decreasing or comes to zero. The predetermined start condition requires the clutch in a disengaged state and, additionally, the operation amount of the brake operation member to decrease or to become zero.

The decrease or a complete loss of the operation amount of the brake operation member is included as a requirement for the predetermined start condition, so that the automatic start of the engine effectively reflects a driver's intention to move. The engine is automatically stopped as long as possible and automatically started just before the vehicle starts moving, thus improves fuel efficiency. The predetermined start condition also includes the clutch in a disengaged state as a requirement, which means the engine is automatically started in a state that the transmission, driving wheels and rotating members that lie between them are disconnected. As a result, the engine start by a starter becomes more reliable and an engine stall is avoided. Furthermore, the predetermined braking force is generated irrespective of the operation amount of the brake operation member and is sustained over the predetermined hold time duration. As a result, a sudden acceleration of the vehicle unintentional to the driver is avoided.

According to the present invention, the idling stop control device further includes a start restricting means such that restricts the start of the engine despite the predetermined start condition is satisfied, when the clutch is operated to contact from a disengaged state before a predetermined allowed time duration elapses, which is a duration shorter than the predetermined hold time duration, from the specific point in time where the operation amount of the brake operation member starts decreasing or comes to zero.

The idling stop control device restricts the start of the engine when the clutch is operated to contact from a disengaged state before the predetermined allowed time duration elapses from the specific point in time where the decrease or the complete loss of the operation amount occurs in the brake operation member, despite the predetermined start condition is satisfied. In other words, when the driver is too early on a clutch engagement operation after the release of the brake operation member, the start of the engine is restricted. Because the start of the engine is restricted when the clutch is engaged, risks for example a sudden acceleration or an engine stall are avoided.

Preferably, the idling stop control device further includes a movement allowing means releasing the predetermined braking force immediately when the allowed time duration elapses from the specific point in time where the operation amount of the brake operation member starts decreasing or comes to zero and when the clutch is operated to contact from a disengaged state before the predetermined hold time duration elapses.

The idling stop control device releases the predetermined braking force immediately when the allowed time duration elapses from the specific point in time where the decrease or the complete loss of the operation amount occurs in the brake operation member and when the clutch is operated to contact from the disengaged state before the hold time duration elapses. Fuel efficiency is improved because after the automatic start of the engine, the vehicle is allowed to start moving at an intended timing of the driver. Furthermore, because the braking force is sustained until the clutch comes to the contact state just before the vehicle starts moving, the rear motion that occurs when moving the vehicle from the temporary stop on a slope is prevented.

Preferably, the idling stop control device further includes a stop judgment means judging a satisfaction of the predetermined stop condition while the vehicle is in motion, an automatic stop means stopping the engine automatically when the predetermined stop condition is satisfied, an engine-stopped-period braking force generation means generating the predetermined braking force when the vehicle speed comes to zero after the automatic stop of the engine, and the predetermined stop condition requiring a speed of the vehicle as less than or equal to a predetermined vehicle speed or a speed of the engine as less than or equal to a predetermined engine speed.

Because the predetermined stop condition requires the speed of the vehicle or the speed of the engine as less than or equal to the predetermined speed for each, the engine is automatically stopped before the vehicle comes to a complete stop, which leads to an improved fuel efficiency. Furthermore, when the vehicle speed reaches zero, a predetermined braking force is generated irrespective of the operation amount of the brake operation member. As a result, the rear motion that occurs when moving the vehicle from the temporary stop on a slope is effectively prevented, as well as a sudden acceleration is avoided whenever the engine automatically starts.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram illustrating a functional configuration including a powertrain configuration of an embodiment of an idling stop control device equipped on a vehicle.

Fig. 2 is a flow diagram showing a control procedure for an automatic engine stop by the idling stop control device.

Fig. 3 is a flow diagram showing a control procedure for an automatic engine start by the idling stop control device.

Fig. 4 is a time-line diagram illustrating an example of the automatic engine stop by the idling stop control device.

Fig. 5 is a time-line diagram illustrating an example of the automatic engine start by the idling stop control device during a typical operation.

Fig. 6 is a time-line diagram illustrating an example of the automatic engine start by the idling stop control device when the clutch contact operation is delayed.

Fig. 7 is a time-line diagram illustrating an example of the automatic engine start by the idling stop control device when the clutch operation is too early and a stating of the engine is restricted.

### DETAILED DESCRIPTION

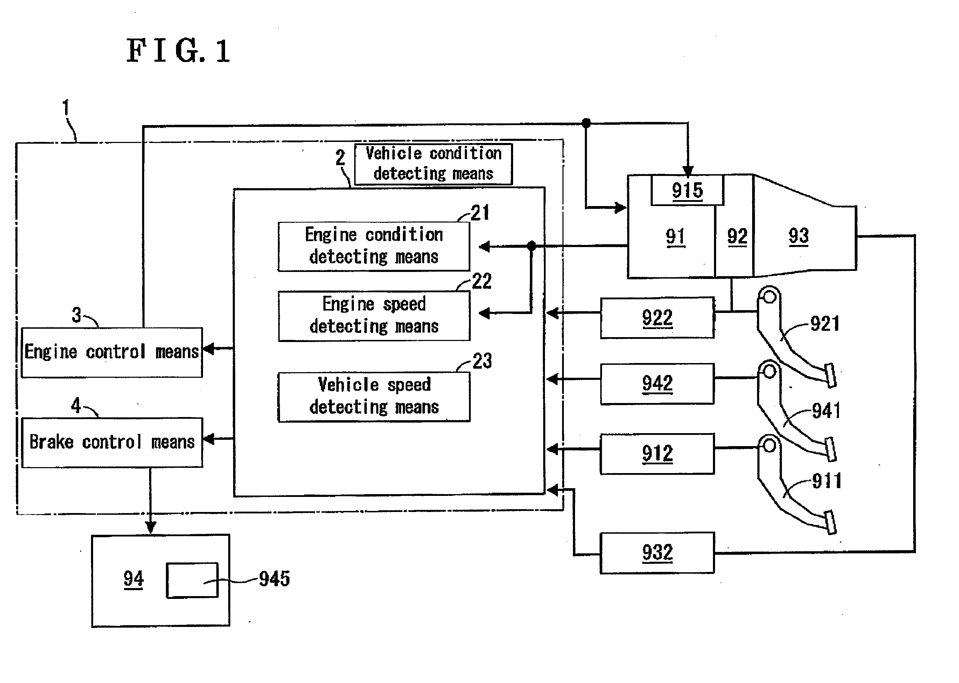

An embodiment of an idling stop control device 1 will be described as follows referring to Figs. 1 to 7. Fig. 1 is a block diagram illustrating a functional configuration including a powertrain configuration of an embodiment of the idling stop control device 1 equipped on a vehicle. Arrows in Fig. 1 represent flow directions of controls, for example, measured values or commands. As shown in the block diagram, the powertrain of the vehicle includes an engine 91, a clutch 92, a transmission 93. The engine 91 includes a starter 915 that uses a starter motor. The clutch 92 connects the engine 91 and the transmission 93 in a selectively engaging manner. An output shaft of the transmission 93 is connected to driving wheels via axles.

An accelerator pedal 911 is provided for controlling an air-fuel mixture supply amount to the engine 91. The accelerator pedal 911 is provided with an accelerator opening degree sensor 912 for detecting an amount of the accelerator pedal 911 pressed for the operations. A clutch pedal 921 is provided for controlling the clutch 92. The clutch pedal 921 is provided with a clutch pedal stroke sensor 922 for detecting an amount of the clutch pedal 921 pressed for the operations. The clutch 92 is of a conventional type, which is disengaged when a driver presses the clutch pedal 921, becomes a contact state and starts to be engaged when the pressed amount of the clutch pedal 21 is reduced, and is fully engaged when the pressed amount of the clutch pedal 21 is reduced to zero. The transmission 93 is a manual transmission in which the driver controls a shift lever to change gear positions of the transmission, for example, in D for driving in a forward direction, in R for reversing the direction, or in N for a neutral state. The transmission 93 includes a shift position sensor 932, which detects a shift position SP of the shift lever.

Meanwhile, the vehicle is equipped with a brake system 94, which applies a braking force to each wheel. A conventional type brake system, which uses a braking pressure of a hydraulic fluid for applying the braking force to each wheel, may be used as the brake system 94. A brake pedal 941 is provided as a brake operation member for actuating the brake system 94, and a braking switch 942 is provided for detecting an amount of the brake pedal 941 pressed for an operation. The brake system 94 is equipped with a built-in braking pressure generating means 945 that operates independently from the operation of the brake pedal 941. The braking pressure generating means 945 generates a predetermined braking force irrespective of the amount of the brake pedal 941 pressed for the operation. An electric oil pump or an accumulator tank, for example, may be used as the braking pressure generating means 945.

The idling stop control device 1 includes a vehicle condition detecting means 2, an engine control means 3, and a brake control means 4. The vehicle condition detecting means 2, the engine control means 3, and the brake control means 4 may be configured by combining an electronic control unit (ECU) and a sensor appropriately.

The vehicle condition detecting means 2 includes an engine condition detecting means 21 and an engine speed detecting means 22 for detecting an operation status and a speed of the engine 91. The vehicle condition detecting means 2 also includes a vehicle speed detecting means 23 for detecting a traveling speed of a vehicle (or a vehicle speed). The vehicle condition detecting means 2 receives a signal on an amount of the accelerator pedal 911 being pressed for operation sent from the signal accelerator opening degree sensor 912. Likewise, the vehicle condition detecting means 2 receives a signal on an amount of the clutch pedal 921 being pressed for operation from the clutch pedal stroke sensor 922, a signal on a shift position SP of the shift lever of the transmission 93 from the shift position sensor 932, and a signal on an amount of the brake pedal 941 being pressed for operation from the braking switch 942.

The engine control means 3 receives information on the operation status and the speed of the engine 91, the traveling speed of the vehicle, the amount of each pedal 911, 921, 941 pressed for operation, and the shift position SP of the shift lever of the transmission 93 from the vehicle condition detecting means 2. According to the information received, the engine control means 3 judges whether the predetermined stop condition, which automatically stops the engine 91, and the predetermined start condition, which automatically starts the engine 91, are satisfied or not. Further, according to the judgment results, the engine control means 3 sends necessary control signals, which automatically stop and automatically start the engine 91, to the engine 91 and the starter 915. According to the received control signals, the engine 91 and the starter 915 process an automatic start and an automatic stop of the engine 91.

Like the engine control means 3, the brake control means 4 receives each of the aforementioned information from the vehicle condition detecting means 2. The brake control means 4 calculates amount of a necessary braking force according to the received information and sends a control signal to the brake system 94. The brake system 94 generates and applies the necessary braking force to each wheel according to the received control signal. To apply the braking force to each wheel, the brake control means 4 may control the braking force as a whole, or the braking force applied to each wheel may be controlled by a combination of the brake control means 4 and a direct actuation of the brake system 94 by the brake pedal 941, which generates the braking force in part.

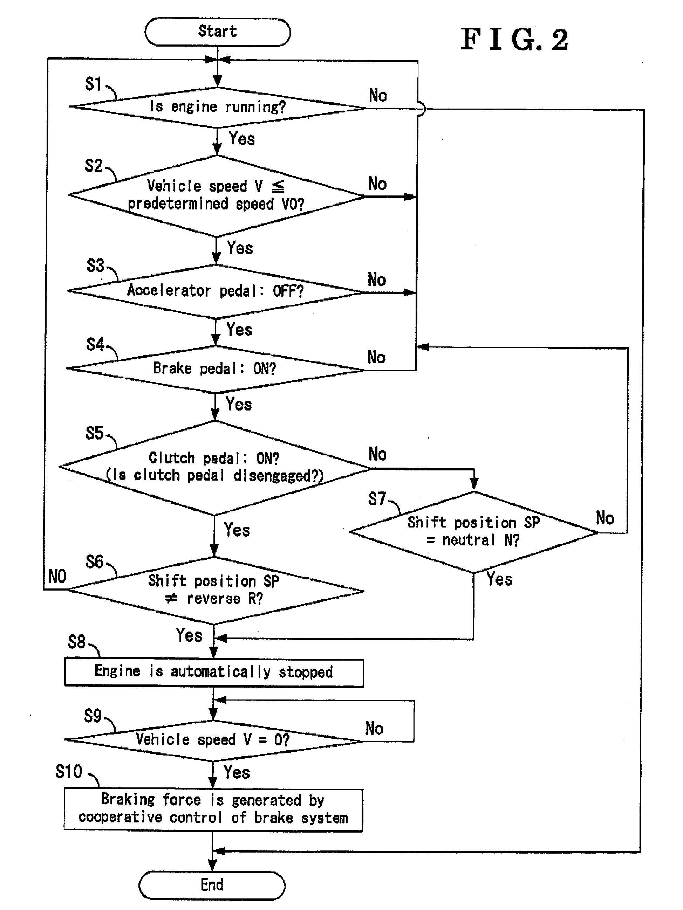

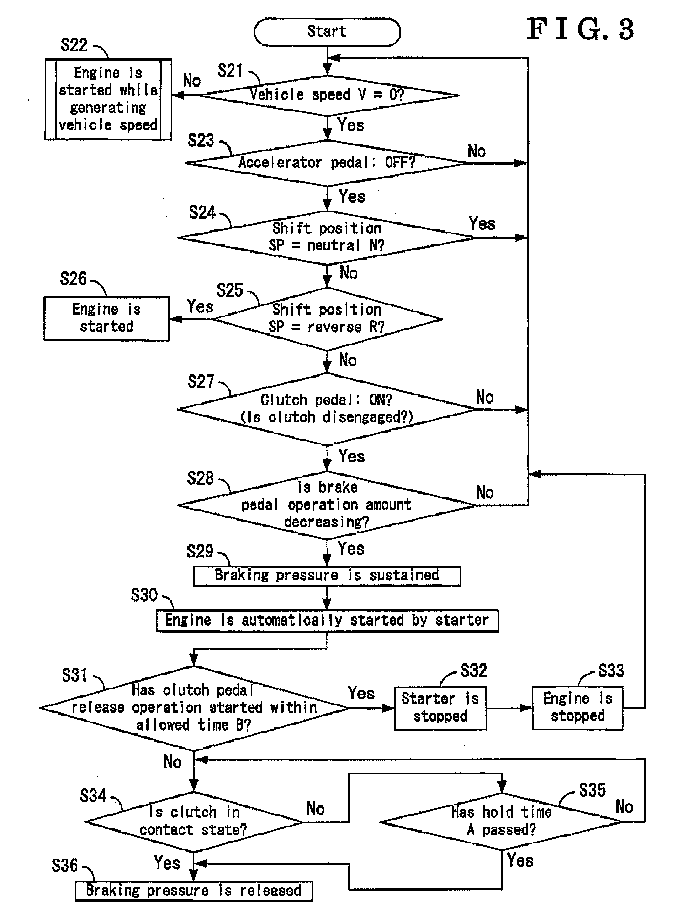

Next, procedures for each function of the idling stop control device 1 to function will be described referring to flow diagrams. Fig. 2 is a flow diagram showing a control procedure for an automatic stop of the engine 91 by the idling stop control device 1. Fig. 3 is a flow diagram showing a control procedure for an automatic start of the engine 91 by the idling stop control device 1.

Step S1 in Fig. 2 for the automatic stop procedure postulates that the engine 91 is in motion. In other words, when the engine 91 is stopped by an operation of a driver and not by an idling stop function, the idling stop control device 1 does not function. When the engine 91 is in motion, the idling stop control device 1 judges whether the traveling speed of the vehicle, or a vehicle speed V, is less than or equal to a predetermined speed V0 or not in Step S2. The predetermined speed V0 is determined to be equal to the vehicle speed when the engine 91 maintains an idling state engine speed. When the vehicle speed V condition is satisfied, release of the accelerator pedal 911 condition is judged in Step S3, pressing of the brake pedal 941 is judged in Step S4, and when the conditions of Steps from S1 to S4 are satisfied, the procedure proceeds to Step S5.

I n Step S5, whether the clutch pedal 921 is pressed or not, or in other words whether the clutch 92 is engaged or disengaged, is judged. When the clutch is disengaged, the procedure proceeds to Step S6 and the procedure proceeds to Step S7 when the clutch is engaged. In Step S6. a shift position SP of the shift lever of the transmission 93 is identified. When the shift position SP is in a position other than reverse R (a gear position R for driving backward), the procedure proceeds to Step S8 and stops the engine 91 automatically, In Step S7, the shift position SP of the shift lever of the transmission 93 is identified. When the shift position SP is in neutral N, the procedure proceeds to Step S8, which stops the engine 91 automatically.

When any of the conditions in Steps S2 to S7 are not satisfied, the procedure goes back to Step S1 in any step. Steps S2 to S7 serve as stop judgment means and Step S8 serves as an automatic stop means. In Step S2, the traveling speed of the vehicle (vehicle speed V) to be less than or equal to the predetermined speed V0 is defined as a requirement for the automatic stop of the engine 91. In Step S6, when the clutch 92 is disengaged and the shift position SP of the shift lever is in reverse R (the gear position R for driving backward), the vehicle is assumed to be in a back-in parking state, therefore, to avoid an operational confusion, the procedure does not proceed to the automatic stop of the engine 91. Also in Step S7, when the clutch 92 is engaged and the shift position SP of the shift lever is in a position other than neutral N, assuming the driver has an intention to accelerate again or to move the vehicle in some other way, the procedure does not proceed to the automatic stop of the engine 91.

After the automatic stop of the engine 91 in Step S8, the procedure proceeds to Step S9, which waits for the vehicle speed V to be reduced to zero. When the vehicle speed V reaches zero, a predetermined braking force is generated by a cooperative brake control in Step S10. In other words, the braking pressure generating means 945 is actuated and controlled to generate a predetermined braking force irrespective of the amount of the brake pedal 941 pressed for operation. Steps S9 and S10 serve as engine-stopped-period braking force generation means.

The automatic start of the engine 91 begins with a confirmation of the vehicle speed V in Step S21 in Fig. 3 for describing the flow of an automatic start procedure. When the vehicle speed V is not zero, the procedure proceeds to Step S22 and starts the engine 91 while generating speed by a conventional method. A situation example for proceeding from Step S21 to Step S22 is when a signal Is changed to green while the vehicle is coming to a temporary stop at a red signal and the driver decides to accelerate the vehicle again. Step S9 in Fig. 2 is in the situation similar to that of Step S21. When the vehicle speed V is zero in Step S21. then the procedure proceeds to Step S23 to judge whether the accelerator pedal 911 is released or not. When the condition is satisfied in Step S23, the procedure proceeds to Step S24 and when the condition is not satisfied, the procedure goes back to Step S21. In Step S24, when the shift position SP of the shift lever of the transmission 93 is in a position other than neutral N, assuming the driver has the intention to move the vehicle, the procedure proceeds to Step S25. When the shift position SP in Step S24 is in neutral N, the procedure goes back to Step S21. In next Step S25, when the shift position SP of the shift lever is in reverse R, the procedure proceeds to Step S26 and immediately starts the engine 91, as shifting to reverse R indicates an intention to move the vehicle.

In Step S25, when the shift position SP of the shift lever is in D for driving in a forward direction, the procedure proceeds to Step S27, the step which judges whether the clutch pedal 921 is pressed or not, or in other words whether the clutch 92 is engaged or disengaged. When the clutch is disengaged, the procedure proceeds to Step S28 and the procedure goes back to Step S21 when the clutch is engaged. In Step S28, whether an operation amount of the brake pedal 941 is decreasing or not is judged. When the condition is satisfied in Step S28, the procedure proceeds to Step S29 and when the condition is not satisfied, the procedure goes back to Step S21. In Step S29, whether or not a predetermined braking pressure is sustained at the wheels is determined. When more braking pressure is necessary, the braking pressure generating means 945 is actuated and is controlled to generate the braking pressure necessary to sustain the predetermined braking pressure. Normally, the predetermined braking pressure is generated and sustained in Step S10 of the procedure for the automatic stop of the engine 91, described in Fig. 2. In next Step S30, the starter 915 initiates the automatic start of the engine 91.

When conditions in Steps S27 and S28 are not satisfied, the procedure goes back to the Step S21. In other words, the clutch 92 being disengaged and the decrease of the operation amount of the brake pedal 41 are defined as requirements for the automatic start of the engine 91. Steps S21 to S28 serve as start judgment means, Step S10 in Fig. 2 and Step S29 serve as braking force sustaining means, and Step S30 serves as a automatic start means.

After the automatic start of the engine 91 in Step S30, Step S31 judges whether or not a release operation of the clutch pedal 921 has started within an allowed time B duration, that is, in other words, whether or not the clutch 92 has operated to contact from the disengaged state. The allowed time B duration is initiated when the decrease of the operation amount of the brake pedal 941 has started. Considering that starting of the engine 91 may take some time, the allowed time B duration is set to end after the engine 91 is completely in motion and before the clutch 92 makes contact prior to the engagement. When the release operation of the clutch pedal 921 is initiated within the allowed time B duration, the procedure proceeds to Step S32 and stops the starter 915 then stops the engine 91 in following Step S33. After Step S33, the procedure goes back to Step S21 and initiates the procedure for the automatic start of the engine 91 once again. A situation example for proceeding from Step S32 to Step S21 via Step S33 is when a driver releases the clutch pedal 921 (or engages the clutch 92) too early after the release of the brake pedal 941 (referring to Step S28). Step S32 and Step S33 serve as start restricting means.

In Step S31, when the clutch pedal 921 is not operated within the allowed time B duration, the procedure proceeds to Step S34. At this point, the clutch 92 is operated to a contact state, and when the clutch 92 reaches a contact state, the procedure proceeds to Step S36 and immediately releases the predetermined braking pressure, which allows the vehicle to move. By sustaining the braking pressure until the clutch 92 reaches a contact state, a sudden acceleration or a rear motion of the vehicle are prevented. Steps S34 and S36 serve as movement allowing means.

While waiting for the contact state in Step S34, an elapsed time is being measured in Step S35. When the elapsed time reaches a hold time A duration, the procedure proceeds to Step 36 and the predetermined braking pressure is released, so that the vehicle may start moving at any time intended. When the driver engages the clutch 92, the vehicle starts moving. The hold time A duration is initiated when the decrease of the operation amount of the brake pedal 941 starts in Step S28 and is set to end after the duration longer than the time it takes for the clutch 92 to reach the contact state in a typical operation.

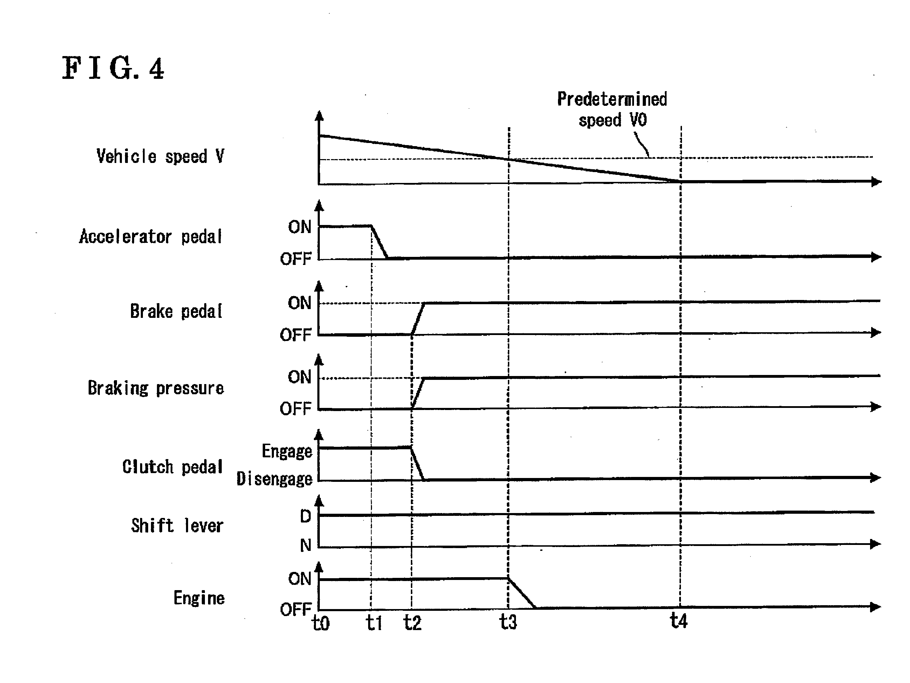

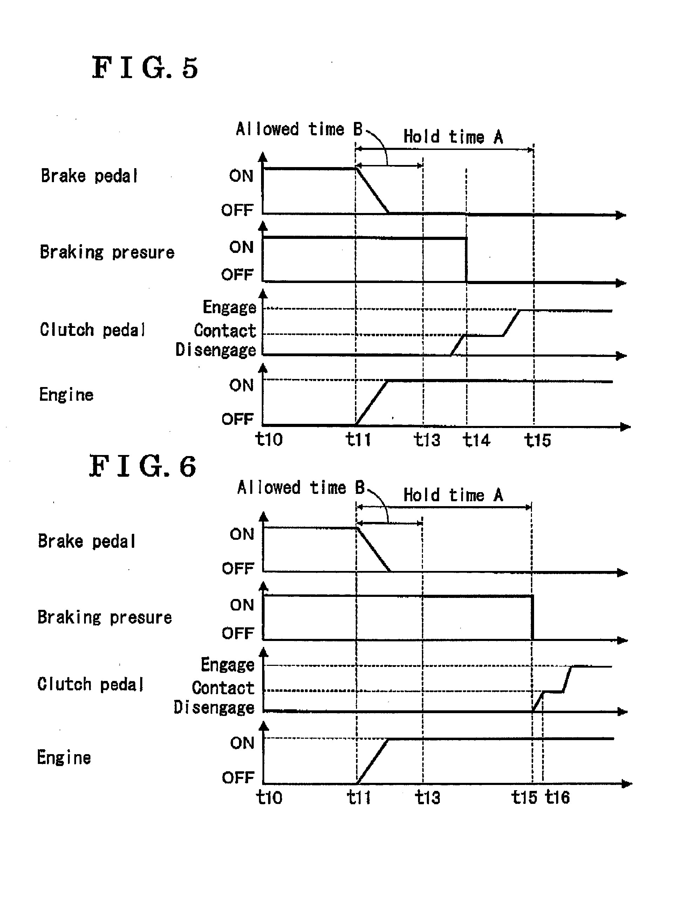

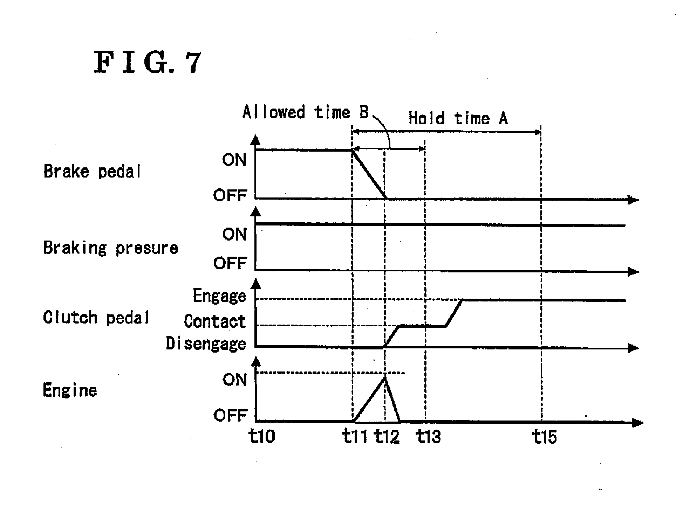

How an embodiment of the idling stop control device 1 behaves, works, and an effectiveness thereof is described next referring to examples. Fig. 4 is a time-line diagram illustrating an example of the automatic engine stop by the idling stop control device 1. Fig. 5 is a time-line diagram illustrating an example of the automatic start of the engine 91 by the idling stop control device 1 in a typical operation. Fig. 6 is a time-line diagram illustrating an example of the automatic engine start by the idling stop control device 1 when the contact operation of the clutch 92 is delayed. Fig. 7 is a time-line diagram illustrating an example of the automatic start of the engine 91 by the idling stop control device 1 when the release of the clutch 92 is too early and the starting of the engine 91 is restricted. Figs. 4 to 7 share common horizontal lines of elapsed time t.

The time-line diagram of Fig. 4 illustrates, respectively from top to bottom, the vehicle speed V, the operation amount of the accelerator pedal 911, the operation amount of the brake pedal 941, the braking pressure in the brake system 94, the operation amount of the clutch pedal 921, shift position SP of the shift lever of the transmission 93, and the operation status of the engine 91. The illustrated example shows that at a time t0, the shift lever is in D position for driving in a forward direction, the engine is running, the vehicle is moving with the accelerator pedal being pressed, and the vehicle speed V is gradually decreasing. At a time t1, the accelerator pedal 911 is released. At a time t2, braking force is generated by the brake pedal 941 being pressed and at the same time the clutch pedal 921 is also pressed. At a time t3, the vehicle speed V drops to the predetermined vehicle speed V0. At this time, the idling stop control device 1 stops the engine 91 automatically, because the conditions in Steps S1 to S6 described in Fig. 2 are satisfied.

After the time t3, the pedals 911, 921, 941 are not operated and when the vehicle speed V reaches zero at a time t4, cooperative control of a brake system is initiated. In other words, when the time t4 is elapsed, the idling stop control device 1 actuates and controls the braking pressure generating means 945 to generate the predetermined braking force.

According to the embodiment of this disclosure, the engine 91 is automatically stopped when the vehicle speed V has reached or gone under the predetermined vehicle speed V0. Because the engine 91 is stopped before the vehicle speed V reaches zero, fuel efficiency is improved compared to when an engine is automatically stopped when a vehicle is stopped. Also, because the predetermined braking force is generated when the vehicle speed V reaches zero, the rear motion of the vehicle that occurs when moving the vehicle from the temporary stop on a slope is effectively prevented, as well as the sudden acceleration is avoided whenever the engine 91 automatically starts.

The time-line diagram of Fig. 5 describing the automatic engine start in a typical operation illustrates, respectively from top to bottom, the operation amount of the brake pedal 941, the braking pressure in the brake system 94, the operation amount of the clutch pedal 921, and the operation status of the engine 91. Figs. 6 and 7 illustrate graphs of the same items as in Fig. 5. In the example illustrated in Fig. 5, at a time t10, the brake pedal 941 is pressed, and irrespective of the amount of the brake pedal 941 pressed for operation, a predetermined braking force is generated. At the same time, the clutch pedal 921 is pressed so that the clutch 92 is disengaged, the engine 91 is at automatic stop status and the vehicle speed V is zero. At this time, a shift position SP is positioned in D for driving in a forward direction.

At at time t11, when the driver releases the brake pedal 941, because the conditions in Step S21 thru Step S28 in Fig. 3 are satisfied, the procedure proceeds to Step S29. As illustrated in Fig. 5, because the braking pressure is being generated, the engine 91 is started automatically. Although the brake pedal 941 is released after the time 11, the braking pressure described in Fig. 5 is sustained because this braking pressure is a pressure generated by actuating and controlling the braking pressure generating means 945. At a time t14, which is a specific point in time after the allowed time B duration elapses (at a time t13) and before the hold time A duration also elapses (at a time t15), when the clutch pedal 921 is operated and the clutch 92 is operated to a contact state, the braking pressure is released and the vehicle starts moving.

According to the embodiment of this disclosure, the engine 91 is sustained in the automatic stop status until just before the operation amount of the brake pedal 941 is decreased. In other words, the engine 91 is automatically started just before the vehicle starts moving. Compared to when the engine 91 is automatically started at the timing of the shift lever of the transmission 93 set to a gear position D for drive, the embodiment according to this disclosure omits idling duration that occurs between the time the shift lever is set to a gear position D for drive until the brake pedal 941 is released, thus improves fuel efficiency. Also, because the predetermined braking force is generated irrespective of the amount of the brake pedal 941 pressed for operation and sustained over the predetermined hold time A duration, sudden acceleration of the vehicle unintentional to the driver is avoided. Furthermore, because the braking force is sustained until the clutch 92 comes to the contact state just before the vehicle starts moving, the rear motion that occurs when moving the vehicle from the temporary stop on a slope is prevented.

Fig. 6 is a time-line diagram illustrating an example of the automatic engine start similar to Fig. 5 when the contact operation of the clutch 92 is delayed. In Fig. 6, after the brake pedal 941 is released at the time t11, the braking pressure is released at the time t15, which is a specific point in time after the hold time A duration elapses, then the clutch pedal 921 is operated at a later point in time t16 so that the clutch 92 reaches the contact state. As illustrated in Fig. 6, even though the operation of the clutch 92 was delayed, followed by the automatic start of the engine 91, the vehicle starts moving.

Fig. 7 is a time-line diagram illustrating an example of the automatic engine start similar to Fig. 5 when the contact operation of the clutch 92 is too early. In Fig. 7, a starting of the engine 91 is restricted because after the brake pedal 941 is released at the time t11, the release operation of the clutch pedal 921 (or the operation of the clutch 92 to the contact state) is started at a time t12, which is a specific point in time before the allowed time B duration elapses. Because the start of the engine 91 is restricted when the clutch 92 is engaged, risks for example a sudden acceleration or an engine stall are avoided. In this situation, the braking pressure is sustained even after the hold time A duration elapses and initiates a next procedure for the automatic start of the engine 91.

In the embodiment of this disclosure, the hold time A duration and the allowed time B duration are set to initiate at the time when the decrease of the operation amount of the brake pedal 941 has started, however the initiation times may be set at a specific point in time when the brake pedal 941 is displaced to a specific position during the operation. Also, several other necessary conditions may be combined to the automatic stop and the automatic start condition of the engine 91 described for the embodiment of this disclosure. Moreover, further applications or variations are possible for the embodiment of this disclosure.

## Claims

1. An idling stop control device (1), adapted to connect a transmission (93) to an engine (91) mounted to a vehicle to be selectively engaged via a clutch (92), for automatically stopping an engine (91) upon satisfaction of a predetermined stop condition during an idling of the engine (91) and for automatically starting the engine (91) upon satisfaction of a predetermined start condition when the engine (91) is in an automatic stop state, comprising:
a braking force sustaining means (S10, S29) generating a predetermined braking force irrespective of an operation amount of a brake operation member during the automatic stop state;
a start judgment means (S21 to S28) judging satisfaction of the predetermined start condition during the automatic stop state;
an automatic start means (S30) automatically starting the engine (91) when the predetermined start condition is satisfied;
the predetermined start condition requiring the clutch (92) in a disengaged state and, additionally, the operation amount of the brake operation member to decrease or to become zero, **characterized by**
a braking force release means (S34, S36) releasing a predetermined braking force when a predetermined hold time (A) duration elapses from a specific point in time where the operation amount of the brake operation member starts decreasing or comes to zero;
the idling stop control device (1) further comprising:
a start restricting means (S32, S33) such that restricts the start of the engine (91) despite the predetermined start condition is satisfied, when the clutch (92) is operated to contact from a disengaged state before a predetermined allowed time (B) duration elapses, which is a duration shorter than the predetermined hold time (A) duration, from the specific point in time where the operation amount of the brake operation member starts decreasing or comes to zero.

2. The idling stop control device (1) according to Claim 1, further comprising:
a movement allowing means (S34, S36) releasing the predetermined braking force immediately when the allowed time (B) duration elapses from the specific point in time where the operation amount of the brake operation member starts decreasing or comes to zero and when the clutch (92) is operated to contact from a disengaged state before the predetermined hold time (A) duration elapses.

3. The idling stop control device (1) according to Claim 1 or 2, further comprising:
a stop judgment means (S2 to S7) judging a satisfaction of the predetermined stop condition while the vehicle is in motion;
an automatic stop means (S8) stopping the engine (91) automatically when the predetermined stop condition is satisfied;
an engine-stopped-period braking force generation means (S9, S10) generating the predetermined braking force when the vehicle speed comes to zero after the automatic stop of the engine (91); and
the predetermined stop condition requiring a speed of the vehicle as less than or equal to a predetermined vehicle speed or a speed of the engine (91) as less than or equal to a predetermined engine speed.

## Patentansprüche

1. Leerlaufstoppsteuervorrichtung (1), die dazu angepasst ist, ein Getriebe (93) mit einer an einem Fahrzeug montierten Kraftmaschine (91) so zu verbinden, dass es über eine Kupplung (92) selektiv eingerückt werden kann, um eine Kraftmaschine (91) nach dem Erfüllen einer vorbestimmten Stoppbedingung während eines Leerlaufs der Kraftmaschine (91) automatisch zu stoppen, und um die Kraftmaschine (91) nach dem Erfüllen einer vorbestimmten Startbedingung automatisch zu starten, wenn sich die Kraftmaschine (91) in einem Automatikstoppzustand befindet, mit:
einem Bremskraftaufnahmemittel (S10, S29), das eine vorbestimmte Bremskraft ungeachtet eines Betätigungsbetrags eines Bremsbetätigungselements während des Automatikstoppzustands erzeugt;
einem Startbeurteilungsmittel (S21 bis S28), das über das Erfüllen der vorbestimmten Startbedingung während des Automatikstoppzustands erteilt;
einem Automatikstartmittel (S30), das die Kraftmaschine (91) automatisch startet, wenn die vorbestimmte Startbedingung erfüllt ist;
wobei die vorbestimmte Startbedingung fordert, dass sich die Kupplung (92) in einem ausgerückten Zustand befindet und dass außerdem der Betätigungsbetrag des Bremsbetätigungselements abnimmt oder zu null wird, **gekennzeichnet durch**
ein Bremskraftlösemittel (S34, S36), das eine vorbestimmte Bremskraft löst, wenn eine vorbestimmte Haltezeitdauer (A) von einem bestimmten Zeitpunkt verstreicht, zu dem der Betätigungsbetrag des Bremsbetätigungselements mit dem Abnehmen startet oder zu null wird;
wobei die Leerlaufstoppsteuervorrichtung (1) ferner Folgendes aufweist:
ein Startbeschränkungsmittel (S32, S33), das den Start der Kraftmaschine (91) beschränkt, obwohl die vorbestimmte Startbedingung erfüllt ist, wenn die Kupplung (92) so betätigt wird, dass sie von einem ausgerückten Zustand in Kontakt kommt, bevor eine vorbestimmte zulässige Zeitdauer (B), die eine Dauer ist, die kürzer als die vorbestimmte Haltezeitdauer (A) ist, ab dem bestimmten Zeitpunkt verstreicht, zu dem der Betätigungsbetrag des Bremsbetätigungselements mit dem Abnehmen startet oder zu null wird.

2. Leerlaufstoppsteuervorrichtung (1) gemäß Anspruch 1, ferner mit:
einem Bewegungszulassmittel (S34, S36), das die vorbestimmte Bremskraft dann sofort löst, wenn die zulässige Zeitdauer (B) ab dem bestimmten Zeitpunkt, zu dem der Betätigungsbetrag des Bremsbetätigungselements mit dem Abnehmen startet oder zu null wird, verstrichen ist, und wenn die Kupplung (92) so betätigt wird, dass sie von einem ausgerückten Zustand in Kontakt gebracht wird, bevor die vorbestimmte Haltezeitdauer (A) verstreicht.

3. Leerlaufstoppsteuervorrichtung (1) gemäß Anspruch 1 oder 2, ferner mit:
einem Stoppbeurteilungsmittel (S2 bis S7), das über das Erfüllen der vorbestimmten Stoppbedingung urteilt, während sich das Fahrzeug bewegt;
einem Automatikstoppmittel (S8), das die Kraftmaschine (91) automatisch stoppt, wenn die vorbestimmte Stoppbedingung erfüllt ist;
einem Kraftmaschinenstoppzeitspannebremskrafterzeugungsmittel (S9, S10), das eine vorbestimmte Bremskraft erzeugt, wenn die Fahrzeuggeschwindigkeit nach dem Automatikstopp der Kraftmaschine (91) zu null wird; wobei
die vorbestimmte Stoppbedingung erfordert, dass eine Geschwindigkeit des Fahrzeugs niedriger als oder gleich wie eine vorbestimmte Fahrzeuggeschwindigkeit ist oder eine Geschwindigkeit der Kraftmaschine (91) kleiner als oder gleich wie eine vorbestimmte Kraftmaschinengeschwindigkeit ist.

## Revendications

1. Dispositif de commande d'arrêt de marche au ralenti (1), prévu pour relier une transmission (93) à un moteur (91) monté sur un véhicule afin d'être engagé de manière sélective par l'intermédiaire d'un embrayage (92), destiné à arrêter automatiquement un moteur (91) lors de la satisfaction d'une condition d'arrêt prédéterminée pendant une marche au ralenti du moteur (91) et destiné à démarrer automatiquement le moteur (91) lors de la satisfaction d'une condition de démarrage prédéterminée quand le moteur (91) est dans un état d'arrêt automatique, comportant :
des moyens de maintien d'une force de freinage (S10, S29) qui génèrent une force de freinage prédéterminée indépendamment d'une valeur d'actionnement d'un élément d'actionnement de frein pendant l'état d'arrêt automatique ;
des moyens d'estimation de démarrage (S21 à S28) qui estiment la satisfaction de la condition de démarrage prédéterminée pendant l'état d'arrêt automatique ;
des moyens de démarrage automatique (S30) qui démarrent automatiquement le moteur (91) quand la condition de démarrage prédéterminée est satisfaite ;
la condition de démarrage prédéterminée exigeant que l'embrayage (92) soit dans un état désengagé et, de manière additionnelle, que la valeur d'actionnement de l'élément d'actionnement de frein diminue ou devienne zéro, **caractérisé par**
des moyens de libération de force de freinage (534, S36) qui libèrent une force de freinage prédéterminée quand une durée de temps de maintien prédéterminé (A) s'écoule à partir d'un moment spécifique où la valeur d'actionnement de l'élément d'actionnement de frein commence à diminuer ou devient zéro ;
le dispositif de commande d'arrêt de marche au ralenti (1) comportant en outré :
des moyens de limitation de démarrage (S32, S33) qui limitent le démarrage du moteur (91) en dépit du fait que la condition de démarrage prédéterminée est satisfaite, quand l'embrayage (92) est actionné pour venir en contact depuis un état désengagé avant qu'une durée de temps autorisé prédéterminé (B) s'écoule, qui est une durée plus courte que la durée de temps de maintien prédéterminé (A), à partir du moment spécifique où la valeur d'actionnement de l'élément d'actionnement de frein commence à diminuer ou devient zéro.

2. Dispositif de commande d'arrêt de marche au ralenti (1) selon la revendication 1, comportant en outré :
des moyens permettant le mouvement (S34, S36) qui libèrent la force de freinage prédéterminée immédiatement quand la durée de temps autorisé (B) s'écoule à partir du moment spécifique où la valeur d'actionnement de l'élément d'actionnement de frein commence à diminuer ou devient zéro et quand l'embrayage (92) est actionné pour entrer en contact à partir d'un état désengagé avant que la durée de temps de maintien prédéterminé (A) s'écoule.

3. Dispositif de commande d'arrêt de marche au ralenti (1) selon la revendication 1 ou 2, comportant en outré :
des moyens d'estimation d'arrêt (S2 à S7) qui estiment une satisfaction de la condition d'arrêt prédéterminée alors que le véhicule est en mouvement ;
des moyens d'arrêt automatique (S8) qui arrêtent automatiquement le moteur (91) quand la condition d'arrêt prédéterminée est satisfaite ;
des moyens de génération de force de freinage de période de moteur arrêté (S9, S10) qui génèrent la force de freinage prédéterminée quand la vitesse de véhicule vient à zéro après l'arrêt automatique du moteur (91) ; et
la condition d'arrêt prédéterminée exigeant qu'une vitesse du véhicule soit inférieure ou égale à une vitesse de véhicule prédéterminée ou qu'une vitesse du moteur (91) soit inférieure ou égale à une vitesse de moteur prédéterminée.
